Europäisches Patentamt

European Patent Office

Office européen des brevets

(19)

(11) **EP 1 145 776 B1**

(12) **FASCICULE DE BREVET EUROPEEN**

(45) Date de publication et mention
de la délivrance du brevet:
**02.01.2004 Bulletin 2004/01**

(51) Int Cl.⁷: $B09C\ 1/02$, $C09K\ 3/32$

(21) Numéro de dépôt: **01400479.0**

(22) Date de dépôt: **22.02.2001**

(54) **Procédé de nettoyage de solides pollués par des hydrocarbures utilisant des esters d'huile végétale ou animale**

nerfahren zur Reinigung von mit Kohlwasserstoffen verseuchten Feststoffen unter Verwendung von aus pflanzlichen oder tierischen Ölen erhaltenen Estern

Method of cleaning hydrocarbon contaminated solids using esters of animal or vegetable oils

(84) Etats contractants désignés:
**DE GB IT NL**

(30) Priorité: **12.04.2000 FR 0004740**

(43) Date de publication de la demande:
**17.10.2001 Bulletin 2001/42**

(73) Titulaire: **Institut Français du Pétrole
92852 Rueil-Malmaison Cedex (FR)**

(72) Inventeurs:
• **Hillion, Gérard
95220 Herblay (FR)**

• **Dalmazzone, Christine
78000 Versailles (FR)**
• **Seris, Henri
92500 Rueil Malmaison (FR)**
• **Huard, Thierry
92120 Montrouge (FR)**

(56) Documents cités:
**EP-A- 0 909 593          EP-A- 0 971 012
WO-A-99/05392          DE-A- 4 200 502
US-A- 5 286 386**

**Description**

L'invention concerne un procédé de dépollution utilisant des esters d'huiles végétales ou animales en tant que produit de séparation et/ou de lavage. Elle s'applique tout particulièrement à la dépollution de sables, graviers et galets pollués par des hydrocarbures et notamment par des hydrocarbures de haute viscosité.

Cette pollution peut être d'origine terrestre (fuite de pipe-line) ou elle peut provenir de la mer, suite à un naufrage par exemple.

La pollution causée par le naufrage de l'ERIKA transportant un fuel lourd n°2 à proximité des côtes occidentales de la France a provoqué une émotion considérable des riverains devant cette laideur visqueuse et nauséabonde qui défigure les plages et bords de mer.

Les moyens mis en oeuvre par les populations locales, les volontaires et les pouvoirs publics ont contribué à collecter à ce jour une quantité considérable de sables et graviers englués dans une pâte hydrocarbonée excessivement visqueuse. A ce jour, plus d'une centaine de milliers de tonnes de déchets minéraux ont été récupérés et stockés. Ils nécessitent un traitement de dépollution apte à séparer les hydrocarbures de la surface minérale, éventuellement à les utiliser en tant que combustible et à récupérer les sables et graviers les plus propres possible, c'est à dire sans risque pour l'environnement. Les sables et graviers pourraient alors être redispersés dans la nature et en particulier sur les plages , ou bien valorisés en tant que matériaux de revêtement routier.

L'arrière plan technologique est illustré par les brevets suivants : WO 99/05 392, US 5 286 386, DE 4 200 502, EP 0 971 012, EP 0 909 593.

Il a été déjà décrit dans une demande de brevet de la Demanderesse FR 2781497 l'utilisation d'esters d'huiles en tant que produit de lavage d'une surface minérale (sables, graviers, galets) polluée par des hydrocarbures, mais il n'est nullement décrit un procédé de dépollution ou de nettoyage de sables et graviers à grande échelle permettant à la fois de récupérer séparément les matériaux les plus décontaminés possibles et les hydrocarbures, sans risque pour l'environnement.

Un objet de l'invention est de répondre à ce problème technique de manière la moins coûteuse possible et avec une excellente efficacité.

Un autre objet de l'invention est de nettoyer des quantités importantes de solides (sables et graviers) enrobés dans des hydrocarbures qui sont stockés depuis longtemps dans des zones de stockage appropriées et qui n'ont pas encore été traités.

Un autre objet de l'invention est d'utiliser pour le nettoyage des solides, non pas des solvants pétroliers toxiques pour l'environnement, mais des produits à bon pouvoir solvant, non toxiques, à fort potentiel de biodégradabilité, et qui conservent une très grande efficacité de nettoyage.

Plus précisément, l'invention concerne un procédé de nettoyage d'un solide souillé par des hydrocarbures utilisant au moins un ester résultant de la réaction d'un alcool de 1 à 8 atomes de carbone et d'un acide gras de 6 à 24 atomes de carbone, caractérisé en ce que l'on met en contact le solide et les hydrocarbures avec ledit ester dans une proportion pondérale appropriée, puis on réalise au moins une fois la séquence d'étapes suivantes :

On met en contact le mélange, solide - hydrocarbures et ester, obtenu avec de l'eau, puis on laisse décanter. On récupère séparément une phase liquide, eau-hydrocarbures et ester, et le solide au moins en partie débarrassé des hydrocarbures et de l'ester.

Les étapes de mise en contact avec l'ester et avec l'eau sont habituellement réalisées dans un récipient comprenant des moyens de malaxage.

Il est avantageux pour minimiser le taux résiduel d'hydrocarbures sur le solide, c'est à dire les sables, graviers et galets de réaliser au moins deux fois la séquence d'étapes de mise en contact du mélange solide-hydrocarbures et ester avec de l'eau, puis de décantation et enfin de récupération séparée des phases liquides eau et hydrocarbures et ester et du sable au moins en partie nettoyé.

On peut ainsi récupérer du solide sensiblement débarrassé de tous les hydrocarbures et ester rajouté. Par exemple, l'efficacité de lavage et de nettoyage peut dépasser 95% et atteindre une valeur supérieure à 99,5%

Le procédé selon l'invention permet d'obtenir un sable suffisamment dépollué qui peut être réintroduit dans le milieu naturel et un mélange fluide (fuel et ester) pompable et pouvant être utilisé comme combustible.

Selon une caractéristique du procédé, la phase liquide récupérée peut être décantée, on récupère séparément une phase aqueuse contenant du sable en suspension et une phase ester-hydrocarbures et on recycle la phase aqueuse après séparation éventuelle du sable.

La proportion pondérale d'ester mise en contact avec le solide et les hydrocarbures peut être de 0,5 à 50%, la limite supérieure étant indiquée plutôt pour des raisons de coûts de revient du procédé que d'efficacité intrinsèque.

On s'est en effet aperçu que les résultats étaient meilleurs lorsque la quantité d'esters de nettoyage était plus importante.

De manière préférée, on utilisera une proportion pondérale de 3 à 15% d'ester par rapport audit mélange solide-hydrocarbures.

La température d'imprégnation par l'ester peut être inférieure à 100°C, par exemple comprise entre 10 et 50°C. A la température ambiante, les résultats sont très bons pour une durée d'imprégnation de 5 à 15 minutes.

Il est préférable que la mise en contact du solide et des hydrocarbures avec l'ester soit réalisée dans un malaxeur de façon à bien imprégner le solide pollué. Tout moyen équivalent peut bien évidemment être préconisé.

La phase de mise en contact du mélange solide-hydrocarbures et ester avec de l'eau peut être réalisée selon une proportion pondérale de 30 % à 1000% et de préférence de 100% à 500%, à une température habituellement inférieure à 100°C et de préférence comprise entre 60°C et 90°C.

Après décantation, le sable en suspension récupéré dans la phase aqueuse peut être éliminé par centrifugation.

Selon une autre caractéristique du procédé, le ou les acides gras constitutifs du ou des esters selon l'invention peuvent provenir de l'huile de palmiste, de palme, de coprah, de colza, d'arachide, de soja, de maïs, de coton, de tournesol, du suif, du saindoux et/ou de mélanges d'huiles industrielles de fritures usagées et de préférence l'huile de colza ou de tournesol.

L'alcool ayant réagi avec les acides gras ci-dessus est avantageusement le méthanol, l'éthanol, le n-butanol et le 2-éthylhexanol. Le n-propanol, l'isopropanol, l'alcool isobutylique ou terbutylique et le n-hexanol peuvent aussi être utilisés.

Ils peuvent être mélangés à au moins un composé tensioactif, de préférence anionique et/ou non ionique, pour disperser le polluant dans le milieu naturel. On peut avantageusement choisir l'oléate de sorbitol.

Les avantages apportés par l'utilisation d'un ester méthylique d'huile végétale sont principalement :

- un pouvoir solvant comparable aux solvants d'origine minérale à faible teneur en aromatiques,
- une biodégradabilité élevée et une non toxicité vis à vis des organismes vivants,
- une disponibilité immédiate de ce produit qui est actuellement fabriqué en France en tant que biocarburant Diesel à concurrence de 235 000 T/an; et donc
- une excellente efficacité sans risque pour l'environnement.

L'eau utilisée dans le procédé peut être de l'eau douce ou de l'eau salée, c'est à dire de l'eau de mer.

Leur mode d'utilisation dépendra de la nature du polluant. Selon un premier mode d'utilisation, pour traiter des coupes lourdes d'hydrocarbures (fuels lourds ou huiles moteur par exemple), on pourra utiliser de préférence des mélanges d'esters provenant d'acides à courtes chaînes (nombre d'atomes de carbone de l'acide majoritaire inférieur à 16). Selon un deuxième mode d'utilisation, on pourra choisir des esters d'huile de colza par exemple, dans laquelle l'acide oléique ($C_{18}$) est prédominant.

La phase ester-hydrocarbures après décantation peut être pompée pour être utilisée comme combustible ou bien elle peut être dispersée en mer si elle n'est pas récupérable.

Le choix des tensio-actifs utilisés pour disperser le polluant dépend en général du mode d'utilisation :

- Si on les introduit dans le mélange d'esters, on choisira des composés tensio-actifs lipophiles de HLB par exemple inférieur à 10..

On peut introduire avantageusement de 1 à 10% du composé tensio-actif par rapport à la phase dans laquelle il est solubilisé.

On peut préparer les esters méthyliques des huiles citées par transestérification en présence d'un catalyseur basique. La préparation d'esters d'huiles végétales par transestérification avec de l'éthanol, du n-propanol, de l'isopropanol, du n-butanol ou de l'isobutanol est beaucoup plus difficile qu'à partir du méthanol. Pour ces alcools, il est préférable d'estérifier par catalyse acide les acides gras correspondants. La catalyse d'estérification d'acides gras est couramment pratiquée dans l'industrie et utilise généralement comme catalyseurs des acides forts comme l'acide chlorhydrique, sulfurique ou des acides sulfoniques du type benzène ou paratoluène sulfonique, ainsi que des résines échangeuses d'ions, selon [H. Hock, K. Gänicke, Ber, 71, 1430-1437 (1938)].

Pour la fabrication d'esters de 2-éthylhexyl, la transestérification d'un ester méthylique par du 2-éthylhexanol par catalyse basique sera de loin préférée.

Les exemples suivants illustrent l'invention ; ils ne sont pas limitatifs.

Caractéristiques des produits mis en jeu

Le solide pollué

Le sable pollué se présente sous la forme d'un déchet pâteux, car fortement imprégné par un fuel lourd, mais non pompable et d'odeur forte et désagréable.

La teneur en fuel peut être comprise par exemple entre 1 et 50% et de préférence entre 5 et 30%.

Pour les exemples qui illustrent l'invention, nous disposons d'un sable pollué dont les caractéristiques sont les suivantes :

64% de sable sec (dont 3% de 'fines')
14% d'émulsion (10% de fuel lourd et 4% d'eau)
22% d'humidité (eau libre)

La teneur en fuel lourd a été déterminée par pesée après extraction par un solvant chloré et évaporation de ce dernier; elle représente de l'ordre de 10% en poids.
La teneur en fuel lourd ramené au poids de sable sec représente alors 15,6 % en poids.
Le sable est constitué de 95 % de particules de granulométrie supérieure à 0.2 mm et de 5% de granulométrie inférieure à 0.2 mm que l'on appelle les 'fines'.

L'ester méthylique de colza (Diester)

Il est obtenu par transestérification d'une huile de colza avec du méthanol suivant les protocoles connus par les fabricants d'esters méthyliques.

- Densité à 20°C = 0,87-0,89,
- point éclair > 185°C,
- température de distillation comprise entre 330 et 350°C.

D'autre part, sa composition chimique (mélange d'esters méthyliques d'acides gras à 16 et 18 atomes de carbone) et son origine végétale en font par définition un produit biodégradable et non toxique. (absence de soufre et d'aromatiques)
De plus il est non miscible dans l'eau, pratiquement sans odeur et possède une très faible tension de vapeur.

EXEMPLE 1

Description du mode opératoire utilisé.
Dans un bécher en verre de 600ml on introduit, à température ambiante, 200g de l'échantillon de sable pollué, puis 15 ml d'ester méthylique de colza.
Par conséquent, ce nouvel échantillon est constitué de 20 g de fuel lourd, de 13,35 g d'ester méthylique de colza et de 128 g de sable sec contenant 6 g de 'fines'.
On mélange à 20°C les produits à la spatule pendant environ 5 minutes puis, sur ce mélange on rajoute tout en continuant de malaxer environ 200 ml d'eau de mer reconstituée (33g de NaCl/l) à une température de 20°C. On constate rapidement une séparation constituée de trois phases distinctes.
Les phases liquides supérieures sont éliminées et on rajoute 300 ml d'eau salée à 20°C, et on agite 1 à 2 minutes de façon à remettre en suspension le sable pour parfaire l'élimination du polluant encore imprégné dans le sable.
Les phase liquides ainsi réunies sont constituées de :

- une phase surnageante contenant de l'ester ayant solubilisé le fuel lourd ,
- une phase aqueuse contenant les fines particules de sable en suspension,
- et en partie inférieure le sable, d'un aspect propre, non collant et possédant une très faible odeur.

Le sable obtenu est séché à l'étuve à 110°C jusqu'à poids constant.
On lave ensuite ce dernier à 3 ou 4 reprises par du dichlorométhane pour extraire totalement l'ester et le fuel restant encore imprégné. Après évaporation du solvant chloré on détermine par pesée le résidu extrait du sable comprenant de l'ester et du fuel résiduels.
La teneur en fuel de ce mélange est obtenue par analyse chromatographique du mélange d'ester/fuel en y ajoutant un étalon interne constitué par un ester méthylique d'acide heptadécanoique, chaîne hydrocarbonée à 17 atomes de carbone, cet acide n'étant pas présent dans les huiles végétales.
On peut exprimer l'efficacité d'extraction en appliquant la formule de calcul suivante :

$$100 - (B \times 100/A)$$

avec :

A : quantité de fuel (en g) contenue dans 100g de sable sec

B : quantité résiduelle de fuel (en g) dans 100g de sable sec.

Dans le cas présent on recueille 634 mg de résidu dans lequel on détermine par chromatographie gazeuse la teneur en fuel qui représente 403 mg.

On obtient ainsi pour cet exemple une efficacité voisine de 96%.

On néglige la présence des fines contenues dans ce sable. Celles-ci se retrouvent dans la phase aqueuse intermédiaire et peuvent être séparées de l'eau par centrifugation. Dans un procédé industriel, cette eau pourra être recyclée.

EXEMPLE 2

On opère comme dans l'exemple 1, avec addition d'eau en 2 fois mais avec une eau à une température de 80°C. Ceci amène le mélange à une température voisine de 60-65°C.

Dans ces conditions, l'efficacité de nettoyage est de 97,2 %

EXEMPLE 3

On opère comme dans l'exemple 1, mais en imprégnant le sable avec de l'ester à 50°C, au lieu de 20°C.

Dans ces conditions, l'efficacité de nettoyage est de 97,0 %

EXEMPLE 4

On opère comme dans l'exemple 2, mais en ajoutant en une seule fois 200ml d'eau à 80°C.

Dans ces conditions, l'efficacité de nettoyage est de 82,7 %.

EXEMPLE 5 comparatif

On opère comme dans l'exemple 2, mais sans effectuer sur le sable l'imprégnation avec de l'ester méthylique de colza.

Dans ces conditions, l'efficacité de nettoyage est de 89,8 %

EXEMPLE 6 comparatif

On opère comme dans l'exemple 1, mais sans effectuer sur le sable l'imprégnation avec de l'ester méthylique de colza. Le tout étant à une température de 20°C Dans ces conditions, l'efficacité de nettoyage est de 83,3 %

EXEMPLES 7 et 7A

On opère comme dans l'exemple 2, mais en imprégnant le sable pollué avec 30 ml (exemple 7) et 7,5ml (exemple 7A) d'ester méthylique de colza au lieu de 15 ml.

Dans ces conditions, l'efficacité de nettoyage est de 97,5 % pour l'exemple 7 et de 91,4% pour l'exemple 7A.

Tableau- 1

| Récapitulatif des résultats des exemples 1 à 7 | | | | | | |
|---|---|---|---|---|---|---|
| Exemple | 1ère addition d'eau | 2ème addition d'eau | T°C de l'eau | T°C du mélange | Efficacité du lavage en % | Quantité d'ester |
| 1 | 200 | 300 | 20 | 20 | 96 | 15 ml |
| 6 | 200 | 300 | 20 | 20 | 83,3 | sans ajout d'ester |
| 2 | 200 | 300 | 80 | 65 | 97,2 | 15 ml |
| 3* | 200 | 300 | 20 | 25 | 97,0 | 15 ml |
| 4 | 200 | 0 | 80 | 50 | 82,7 | 15 ml |
| 5 | 200 | 300 | 80 | 65 | 89,8 | sans ajout d'ester |

Tableau- 1   (suite)

| Récapitulatif des résultats des exemples 1 à 7 | | | | | | |
|---|---|---|---|---|---|---|
| Exemple | 1ère addition d'eau | 2ème addition d'eau | T°C de l'eau | T°C du mélange | Efficacité du lavage en % | Quantité d'ester |
| 7 | 200 | 300 | 80 | 63 | 97,5 | 30 ml |
| 7A | 200 | 300 | 80 | 68 | 91,4 | 7,5ml |
| - *imprégnation du sable par l'ester à la température de 50°C. | | | | | | |

EXEMPLE 8

On opère comme dans l'exemple 4, mais en ajoutant en une seule fois 400ml d'eau à 80°C. Dans ces conditions, l'efficacité de nettoyage est de 90,8 %.

EXEMPLE 9

On opère comme dans l'exemple 2, mais en ajoutant 400ml d'eau à 80°C en deux fois (2 x 200ml). Dans ces conditions, l'efficacité de nettoyage est de 94,4 %.

EXEMPLE 10

On opère comme dans l'exemple 4, mais en ajoutant en une seule fois 160 ml d'eau à 80°C. Dans ces conditions, l'efficacité de nettoyage est de 80,1 %.

EXEMPLE 11

On opère comme dans l'exemple 4, mais en ajoutant en une seule fois 125ml d'eau à 80°C. Dans ces conditions, l'efficacité de nettoyage est de 62,9 %.

EXEMPLE 12 comparatif

On opère comme dans l'exemple 5, mais en ajoutant en une seule fois 400ml d'eau à 80°C. Dans ces conditions, l'efficacité de nettoyage est de 82,1 %.

Tableau- 2

| Récapitulatif des résultats des exemples de 8 à 12 Influence de la quantité d'eau | | | | | | |
|---|---|---|---|---|---|---|
| Exemple | 1ère addition d'eau | 2ème addition d'eau | T°C de l'eau | T°C du mélange | Efficacité du lavage en % | Quantité d'esters |
| 9 | 200 | 200 | 80 | 65 | 94,4 | 15 ml |
| 8 | 400 | 0 | 80 | 65 | 90,8 | 15 ml |
| 4 | 200 | 0 | 80 | 50 | 82,7 | 15 ml |
| 10 | 160 | 0 | 80 | 55 | 80,1 | 15 ml |
| 11 | 125 | 0 | 80 | 50 | 62,9 | 15 ml |
| 12 | 400 | 0 | 80 | 60 | 82,1 | sans ajout d'ester |

EXEMPLE 13

On opère comme dans l'exemple 1, mais en ajoutant un volume identique d'ester méthylique d'huile de palmiste en lieu et place à l'ester méthylique de colza Dans ces conditions, l'efficacité de nettoyage est de 94,3 %.

EXEMPLE 14

On opère comme dans l'exemple 1, mais en ajoutant un volume identique d'ester de 2-éthylhexyl d'huile de colza en lieu et place à l'ester méthylique de colza
Dans ces conditions, l'efficacité de nettoyage est de 92,5 %.

EXEMPLE 15

On opère comme dans l'exemple 1, mais en ajoutant un volume identique de KETRUL A210 en lieu et place à l'ester méthylique de colza
Dans ces conditions, l'efficacité de nettoyage est de 91,5 %.

EXEMPLE 16

On opère comme dans l'exemple 1, mais en ajoutant un volume identique d'ester méthylique de colza contenant 2% d'agent émulsifiant sous la forme d'un sesquioléate de sorbitan en lieu et place à l'ester méthylique de colza seul.
Dans ces conditions, l'efficacité de nettoyage est de 91,9 %.

Tableau - 3

| Récapitulatif des résultats des exemples de 13 à 16 Influence de la nature du solvant utilisé | | | | | |
|---|---|---|---|---|---|
| Exemple | 1ère addition d'eau | 2ème addition d'eau | T°C de l'eau | T°C du mélange | Efficacité du lavage en % |
| 1 | 200 | 300 | 20 | 20 | 96 |
| 13 | 200 | 300 | 20 | 20 | 94,3 |
| 14 | 200 | 300 | 20 | 20 | 92,5 |
| 15 | 200 | 300 | 20 | 20 | 91,5 |
| 16 | 200 | 300 | 20 | 20 | 91,9 |

**Revendications**

1. Procédé de nettoyage d'un solide souillé par des hydrocarbures utilisant au moins un ester résultant de la réaction d'un alcool de 1 à 8 atomes de carbone et d'un acide gras de 6 à 24 atomes de carbone, **caractérisé par** les étapes suivantes :

   a) on met en contact le solide et les hydrocarbures avec le dit ester dans une proportion pondérale appropriée,
   b) on réalise au moins une fois la séquence d'étapes suivantes :

   - on met en contact le mélange solide - hydrocarbures et ester obtenu avec de l'eau,
   - on laisse décanter ; et
   - on récupère séparément une phase liquide, eau - hydrocarbures et ester, et le solide au moins en partie débarrassé des hydrocarbures et de l'ester.

2. Procédé selon la revendication 1, dans lequel la phase liquide est décantée, on récupère séparément une phase aqueuse contenant du sable en suspension et une phase ester-hydrocarbures et on recycle la phase aqueuse après séparation éventuelle du sable dans l'étape b).

3. Procédé selon l'une des revendications 1 et 2 dans lequel ledit ester est dans une proportion pondérale de 0,5 à 50% par rapport au solide et hydrocarbures et de préférence de 3 à 15%.

4. Procédé selon l'une des revendications 1 à 3 dans lequel la proportion pondérale d'eau mise en contact avec le mélange solide-hydrocarbures est comprise entre 30% et 1000% et de préférence entre 100% et 500%.

5. Procédé selon l'une des revendications 1 à 4 dans lequel la température de mise en contact avec l'ester est inférieure à 100°C.

6. Procédé selon l'une des revendications 1 à 5 dans lequel la température de l'eau dans l'étape b) est inférieure à 100°C et de préférence entre 60°C et 90°C.

7. Procédé selon l'une des revendications 1 à 6 dans lequel la mise en contact du solide et des hydrocarbures avec l'ester et avec l'eau est réalisée dans un malaxeur.

8. Procédé selon l'une des revendications 2 à 7 dans lequel le sable de la phase aqueuse est éliminé par centrifugation.

9. Procédé selon l'une des revendications 1 à 8 dans lequel le ou les acides gras proviennent de l'huile de palmiste, de palme, de coprah, de colza, d'arachide, de soja, de maïs, de coton, de tournesol, du suif, du saindoux et/ou de mélanges d'huiles industrielles de fritures usagées et de préférence l'huile de colza ou de tournesol.

10. Procédé selon l'une des revendications 1 à 9 dans lequel l'alcool est le méthanol, l'éthanol, le n-butanol et le 2-éthylhexanol.

11. Procédé selon l'une des revendications 1 à 10 dans lequel le solide est du sable, du gravier et/ou des galets.

12. Procédé selon l'une des revendications 1 à 11 dans lequel l'eau est de l'eau de mer.


**Patentansprüche**

1. Verfahren zum Reinigen eines Feststoffs, der durch Kohlenwasserstoffe unter Verwendung wenigstens eines Esters aus der Reaktion eines Alkohols mit 1 bis 8 Kohlenstoffatomen und einer Fettsäure mit 6 bis 24 Kohlenstoffatomen verunreinigt ist, **gekennzeichnet durch** die Abfolge folgender Stufen:

    a. man kontaktiert den Feststoff und die Kohlenwasserstoffe mit diesem Ester in einem geeigneten Gewichtsanteil und

    b. man realisiert wenigstens einmal die Abfolge der folgenden Stufen:

        i. man kontaktiert das Gemisch Feststoffe-Kohlenwasserstoffe und Ester, das mit Wasser erhalten wurde,

        ii. man lässt dekantieren und

        iii. man gewinnt getrennt eine flüssige Phase, Wasser-Kohlenwasserstoffe und Ester, und den Feststoff, der wenigstens zum Teil von den Kohlenwasserstoffen und dem Ester befreit wurde.

2. Verfahren nach Anspruch 1, bei dem die flüssige Phase dekantiert wird, man getrennt eine wässrige Phase, die Sand in Suspension und eine Phase Ester-Kohlenwasserstoffe enthält, gewinnt, und man die wässrige Phase gegebenenfalls nach Abtrennung des Sandes in Stufe b) rezykliert.

3. Verfahren nach einem der Ansprüche 1 und 2, bei dem dieser Ester in einem Gewichtsanteil von 0,5 bis 50 %, bezogen auf den Feststoff und die Kohlenwasserstoffe, und bevorzugt 3 bis 15 %, vorhanden ist.

4. Verfahren nach einem der Ansprüche 1 bis 3, bei dem der Gewichtsanteil von Wasser, der mit dem Gemisch aus Feststoff-Kohlenwasserstoffe kontaktiert wird, zwischen 30 % und 1000 %, bevorzugt zwischen 100 % und 500 %, beträgt.

5. Verfahren nach einem der Ansprüche 1 bis 4, bei dem die Kontaktierungstemperatur mit dem Ester unter 100°C liegt.

6. Verfahren nach einem der Ansprüche 1 bis 5, bei dem die Temperatur des Wassers in der Stufe b) unter 100°C und bevorzugt zwischen 60°C und 90°C liegt.

**7.** Verfahren nach einem der Ansprüche 1 bis 6, bei dem die Kontaktierung des Feststoffs und der Kohlenwasserstoffe mit dem Ester und mit dem Wasser in einem (Knet)mischer realisiert wird.

**8.** Verfahren nach einem der Ansprüche 2 bis 7, bei dem der Sand aus der wässrigen Phase durch Zentrifugieren eliminiert wird.

**9.** Verfahren nach einem der Ansprüche 1 bis 8, bei dem die Fettsäure(n) aus Palmkernöl, Palmöl, Kopraöl, Colzaöl, Erdnussöl, Sojaöl, Maisöl, Baumwollsamenöl, Sonnenblumenöl, Talköl, Schweineschmalzöl und/oder Gemischen industrieller verbrauchter Friteusenöle und bevorzugt Colzaöl oder Sonnenblumenöl stammt bzw. stammen.

**10.** Verfahren nach einem der Ansprüche 1 bis 9, bei dem der Alkohol Methanol, Ethanol, n-Butanol und 2-Ethylhexanol ist.

**11.** Verfahren nach einem der Ansprüche 1 bis 10, bei dem der Feststoff Sand, Kies und/oder Rollkiesel ist.

**12.** Verfahren nach einem der Ansprüche 1 bis 11, bei dem das Wasser Meereswasser ist.


**Claims**

**1.** A process for cleaning a solid soiled by hydrocarbons, using at least one ester resulting from reacting an alcohol containing 1 to 8 carbon atoms with a fatty acid containing 6 to 24 carbon atoms, **characterized by** the following steps:

a) bringing the solid and hydrocarbons into contact with said ester in a suitable proportion by weight;
b) carrying out the following sequence of steps at least once:

- bringing the solid-hydrocarbons and ester mixture obtained into contact with water;
- allowing it to decant; and
- separately recovering a liquid, water-hydrocarbons and ester phase, and the solid at least partially freed of hydrocarbons and ester.

**2.** A process according to claim 1, in which the liquid phase is decanted, an aqueous phase containing sand in suspension is recovered separately from an ester-hydrocarbon phase, and the aqueous phase is recycled to step b) after separating any sand.

**3.** A process according to claim 1 and claim 2, in which said ester is in a proportion by weight of 0.5% to 50% by weight with respect to the solid and hydrocarbons, preferably in the range 3% to 15%.

**4.** A process according to one of claims 1 to 3, in which the proportion by weight of water brought into contact with the solid-hydrocarbons mixture is in the range 30% to 1000%, preferably in the range 100% to 500%.

**5.** A process according to one of claims 1 to 4, in which the temperature of contact with the ester is less than 100°C.

**6.** A process according to one of claims 1 to 5, in which the temperature of the water in step b) is less than 100°C and preferably in the range 60°C to 90°C.

**7.** A process according to one of claims 1 to 6, in which the solid and hydrocarbons are brought into contact with the ester and the water in a mixer.

**8.** A process according to one of claims 2 to 7, in which the sand is eliminated from the aqueous phase by centrifuging.

**9.** A process according to one of claims 1 to 8, in which the fatty acid or acids derive from palm nut oil, African oil, copra oil, rapeseed oil, peanut oil, soya oil, corn oil, cottonseed oil, sunflower seed oil, tallow, lard and/or mixtures of used industrial cooking oil, preferably rapeseed oil or sunflower seed oil.

**10.** A process according to one of claims 1 to 9, in which the alcohol is methanol, ethanol, n-butanol or 2-ethylhexanol.

**11.** A process according to one of claims 1 to 10, in which the solid is sand, gravel and/or pebbles.

**12.** A process according to one of claims 1 to 11, in which the water is seawater.